# EUROPEAN PATENT APPLICATION

(11) **EP 4 212 709 A1**
(43) Date of publication of application: **19.07.2023**
(21) Application number: 22151734.5
(22) Date of filing: 17.01.2022
(51) Int. Cl.: F01N 11/00, F01N 13/00, G01M 15/10

(54) **EXTERNAL NOX EXHAUST MEASURING DEVICE**

(71) Applicant: HSP-Messtechnik UG (haftungsbeschränkt), 71063 Sindelfingen (DE)
(72) Inventor: Habfast, Svena, 73033 Göppingen (DE)
(74) Representative: Meyer zu Bexten, Elmar

(57) **Abstract**

**Problem**

A known measuring device (portable emissions measuring system PEMS) for detecting interference, such as tampering, with a vehicle's nitrogen oxide abatement system relies upon structural integration with said system, intrinsically tying the detection device to the vehicle under examination. Any inspection of that vehicle would thus need to exclude interference with the detection device itself - essentially shifting the burden of the inspector rather than lifting it.

**Solution**

Measuring device for detecting interference, such as tampering, with a system for abating nitrogen oxide,
providing
a chamber, preferably of stainless steel, for receiving gaseous exhaust such as from an automotive diesel engine and
a NOₓ sensor, preferably screwed into the chamber, and optionally a particulate sensor for measuring quantity of the nitrogen oxide in the exhaust gas.

## Description

### Technical Field

The invention relates to the device and method as per the first portion of the independent claims.

### Background Art

According to the United States Environmental Protection Agency, nitrogen oxide (NOₓ) abatement technologies are divided into pollution prevention, which reduces NOx *generation,* and add-on control technologies, which reduce NOₓ *emission* (cf. NPL1). Among the latter technologies is selective catalytic reduction (SCR), which has become the preferred method for meeting diesel emissions standards for vehicles of all kinds. In this type of SCR, diesel exhaust fluid (DEF), an aqueous solution containing 32.5 % urea and being marketed by the brand name AdBlue, is consumed as a reducing agent. Specifically, DEF from a separate tank is injected into the exhaust pipeline, where the exhaust heat decomposes it to ammonia (NH₃). Within the SCR catalyst, NOₓ is reduced by the ammonia into water and nitrogen, which are then released into the atmosphere with the exhaust gas.

Vehicles equipped for SCR are designed so that a failure in the emission control system will cause the vehicle to switch to "limp mode", limiting engine performance and reducing attainable driving speed. To avoid the costs of adding AdBlue and maintaining the emission control system and the vehicle switching to limp mode, a large market has emerged for so-called AdBlue emulators, often fitted in a hidden place inside the vehicle. This situation is aggravated by an increasing number of software offerings that essentially serve the same purpose. Both types of defeat device override the vehicle's engine emission control, pretending that the system is functioning properly even when NOₓ abatement is entirely disabled. Hence, their operation is illegal in the European Union and other legislations.

Other forms of tampering seen in heavy-duty vehicles include removal of the particulate filter at the expense of significantly increased particulate matter and noise emissions.

PTL1 discloses a device for tamper detection of an SCR catalyst system having a reducing agent tank and sensors arranged in the reducing agent tank. The sensors form a structural unit with a controller arranged in or on the reducing agent tank. The expected consumption of the reducing agent solution within a predeterminable period is determined from sensor data of at least one sensor of the structural unit, and the actual consumption of the reducing agent solution within a predeterminable period is determined from data of at least one measuring unit of the structural unit. Tampering, such as by means of an AdBlue emulator, with the SCR catalyst system is inferred from a comparison of the expected consumption with the actual consumption and reported to police or other competent authority via a wireless network.

### Summary of invention

The invention is set out in the appended set of claims.

### Technical Problem

The device of PTL1 relies upon structural integration with the NOₓ abatement system. In an automotive context, this dependency intrinsically ties the detection device to the vehicle under examination. Any inspection of that vehicle would thus need to exclude interference with the detection device itself - essentially shifting the burden of the inspector rather than lifting it.

Moreover, the device of PTL1 requires an encrypted connection to the vehicle's engine control unit (ECU), suggesting that both units would typically be offered by the same or strongly affiliated suppliers. Hence, even where complicity on the part of the *owner or operator* could be ruled out, the known device fails to account for the possibility of an adversarial *manufacturer,* neglecting the fact that consumer demands for performance, efficiency, or cost create a powerful incentive for automakers and their suppliers to evade the regulatory burden. For instance, as reported in NPL2, several Volkswagen vehicles implicated in the emission cheating scandal limit urea injection levels outside of a test cycle. To a similar effect, the Fiat 500X sports utility vehicle reduces the frequency at which its NOₓ storage catalyst regenerates. Both defeat devices are based upon the Bosch EDC17 ECU.

### Solution to Problem

The problem is solved as per the second portion of Claim 1.

### Advantageous effect of invention

The invention provides workshops, technical monitoring bodies, and especially law enforcement agencies with a reliable tool for verifying the integrity of any SCR or other NOₓ abatement system in an untrusted environment, for example, while carrying out roadside spot checks. Advantageously, the device's functionality neither depends on the make and model of the engine nor on proprietary equipment provided by the latter's manufacturer.

Assembled from commercially available components, a variant is driven by a microcontroller and operated in defined sequence using a keypad and display. The resulting measuring device establishes NOₓ concentration in the exhaust gas stream under realistic conditions and displays the results in a matter of minutes.

Preferably, the device is upgradeable to account for additional measurements such as of particulate matter or NH₃, permitting validation and refinement of the analysis.

### Brief description of drawings

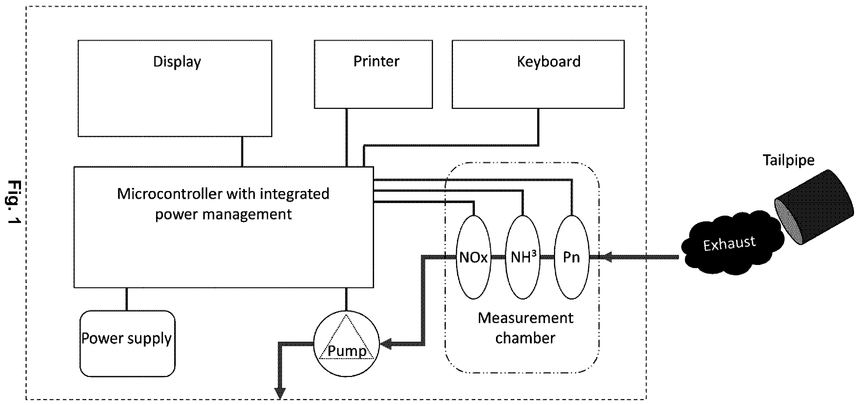

Figure 1 shows a schematic of a measuring device.

### Description of embodiments

A carrying case - symbolized as a dashed rectangle - encases a stainless-steel measurement chamber in fluid communication with a PTFE-coated diaphragm pump and external gas probe (not depicted). Actuated by a microcontroller through a relay board (not depicted), the electric pump creates a partial vacuum within the chamber, charging the latter with gaseous exhaust that enters the probe from the tailpipe of a diesel-driven vehicle equipped with an SCR system (not depicted). Details of the vehicle and driver may be specified by the operator using a keyboard connected wirelessly to the device.

While the measuring chamber continues to be flooded with gas, its contents are analyzed. To this end, the chamber is populated with NOₓ, NH₃, and particle number (PN) sensors connected to the microcontroller by means of associated electronic control units. If NOₓ quantity exceeds a certain limit, the microcontroller infers an impaired SCR, as may be caused - aside from tampering - by a mechanically defective monolithic catalyst support, degraded catalyst, or, where applicable, ongoing regeneration of the particulate filter. In such cases, some NH₃ will typically pass through the SCR unreacted, a circumstance known in the industry as "ammonia slip". In an advanced embodiment, considering this effect, the microcontroller is programmed to also evaluate the output of the NH₃ sensor, qualifying the detected interference as fraudulent manipulation only if NH₃ falls short of a given threshold.

The results of this test - including the measured quantities in parts per million (ppm) - are shared with the user by means of a thermal printer and TFT display, the latter also serving to guide the user through the test procedure. Electrical current for these peripherals, as well as the vacuum pump and sensors, is supplied by a rechargeable battery, adapted in voltage by multiple step-up or step-down converters as required, and distributed under power management by the microcontroller. It is well understood that cables, various tubes, and couplings - while not described herein for simplicity's sake - may be employed for electrical, fluidic, and mechanical connection.

### Industrial applicability

The invention is applicable, inter alia, throughout the test and measurement (T&M) industry.

### Citation list

The following documents are cited hereinbefore.

### Patent literature

PTL1: DE 102018214846 A (ROBERT BOSCH GMBH) 03.05.2020

### Non-patent literature

NPL1: BLASZCZAK, Robert J. Nitrogen Oxides (NOx): Why and How They Are Controlled. Technical Bulletin EPA-456/F-99-006R. November 1999, p.11.
NPL2: CONTAG, Moritz, et al. How they did it: An analysis of emission defeat devices in modern automobiles. Proceedings of the IEEE Symposium on Security and Privacy. 2017, p.231-250.

## Claims

1. Measuring device for detecting interference, such as tampering, with
a system for abating nitrogen oxide,
**characterized in**
a chamber, preferably of stainless steel, for receiving gaseous exhaust such as from an automotive diesel engine and
a NOₓ sensor, preferably screwed into the chamber, for measuring quantity of the nitrogen oxide in the exhaust gas.

2. Device as perClaim 1,
**characterized in**
an electric vacuum pump, preferably with a PTFE-coated diaphragm, in fluid communication with the chamber for charging and discharging the exhaust.

3. Device as perClaim 2,
**characterized in**
a microcontroller, preferably with integrated power management, in electronic communication with the NOₓ sensor for controlling the vacuum pump.

4. Device as per Claim 3,
**characterized in**
a power supply, such as a rechargeable battery, for supplying at least the NOₓ sensor, vacuum pump, and microcontroller with an electrical current.

5. Device as per Claim 4,
**characterized in**
multiple step-up or step-down converters for adapting the current in voltage.

6. Device as per any of Claim 3 through Claim 5,
**characterized in**
a display, such as a thin-film-transistor liquid-crystal display, in electronic communication with the microcontroller for providing user guidance and displaying the measured quantity, such as in parts per million.

7. Device as per any of Claim 3 through Claim 6,
**characterized in**
a preferably thermal printer in electronic communication with the microcontroller for printing test results such as the measured quantity.

8. Device as per any of Claim 3 through Claim 7,
**characterized in**
a preferably wireless keyboard in electronic communication with the microcontroller for operating the device.

9. Device as per any of Claim 3 through Claim 8,
**characterized in**
an electronic control unit in electronic communication with the microcontroller for controlling the NOₓ sensor.

10. Device as per Claim 9,
**characterized in**
multiple relay boards in electronic communication with the microcontroller for switching at least the vacuum pump and control unit.

11. Device as per any of Claim 3 through Claim 10,
**characterized in**
a PN sensor in electronic communication with the microcontroller for measuring particulate matter suspended within the exhaust gas.

12. Device as per any of Claim 2 through Claim 11,
**characterized in**
an NH₃ sensor in electronic communication with the microcontroller for measuring quantity of ammonia in the exhaust gas,
wherein
the microcontroller is programmed to detect the interference if the quantity of the nitrogen oxide is above a given upper limit and qualify the interference as tampering if the quantity of the ammonia is below a given lower limit.

13. Device as per any of the preceding claims,
**characterized in**
a case, preferably carrying case, encasing at least the chamber.

14. Device as per Claim 13,
**characterized in**
a gas probe in fluid communication with the chamber for probing a tailpipe, such as of a heavy-duty vehicle.

15. Device as per any of the preceding claims,
**characterized in**
cables, various tubes, and couplings.

## Amended claims

### Amended claims in accordance with Rule 137(2) EPC.

1. Measuring device for detecting interference, such as tampering, with
a system for abating nitrogen oxide,
having
a chamber, preferably of stainless steel, for receiving gaseous exhaust such as from an automotive diesel engine and
a NOₓ sensor, preferably screwed into the chamber, for measuring quantity of the nitrogen oxide in the exhaust gas,
**characterized in**
an electric vacuum pump, preferably with a PTFE-coated diaphragm, in fluid communication with the chamber for charging and discharging the exhaust,
a microcontroller, preferably with integrated power management, in electronic communication with the NOₓ sensor for controlling the vacuum pump,
a power supply, such as a rechargeable battery, for supplying at least the NOₓ sensor, vacuum pump, and microcontroller with an electrical current,
a display, such as a thin-film-transistor liquid-crystal display, in electronic communication with the microcontroller for providing user guidance and displaying the measured quantity, such as in parts per million,
a preferably thermal printer in electronic communication with the microcontroller for printing test results such as the measured quantity,
an electronic control unit in electronic communication with the microcontroller for controlling the NOₓ sensor,
an NH₃ sensor in electronic communication with the microcontroller for measuring quantity of ammonia in the exhaust gas, and
a carrying case encasing at least the chamber, NOₓ sensor, NH₃ sensor, vacuum pump, microcontroller, power supply, display, printer, and control unit, wherein
the microcontroller is programmed to detect the interference if the quantity of the nitrogen oxide is above a given upper limit and qualify the interference as tampering if the quantity of the ammonia is below a given lower limit.

2. Device as per Claim 1,
**characterized in**
multiple step-up or step-down converters for adapting the current in voltage.

3. Device as per any of the preceding claims,
**characterized in**
a display, such as a thin-film-transistor liquid-crystal display, in electronic communication with the microcontroller for providing user guidance and displaying the measured quantity, such as in parts per million.

4. Device as per any of the preceding claims,
**characterized in**
a preferably wireless keyboard in electronic communication with the microcontroller for operating the device.

5. Device as per any of the preceding claims,
**characterized in**
multiple relay boards in electronic communication with the microcontroller for switching at least the vacuum pump and control unit.

6. Device as per any of the preceding claims,
**characterized in**
a PN sensor in electronic communication with the microcontroller for measuring particulate matter suspended within the exhaust gas.

7. Device as per any of the preceding claims,
**characterized in**
a gas probe in fluid communication with the chamber for probing a tailpipe, such as of a heavy-duty vehicle.

8. Device as per any of the preceding claims,
**characterized in**
cables, various tubes, and couplings.
